# EUROPÄISCHE PATENTSCHRIFT

(11) **EP 4 046 098 B1**
(45) Veröffentlichungstag und Bekanntmachung des Hinweises auf die Patenterteilung: **19.06.2024**
(21) Anmeldenummer: 20816114.1
(22) Anmeldetag: 16.11.2020
(51) Int. Cl.: G06Q 10/0631, G06Q 50/40

(54) **VERFAHREN ZUR PLATZVERGABE IN EINEM LANDFAHRZEUG**
METHOD FOR ALLOCATING SEATS IN A LAND VEHICLE
PROCÉDÉ D'ATTRIBUTION DE SIÈGES DANS UN VÉHICULE TERRESTRE

(30) Priorität: 16.12.2019 DE 102019219741
(43) Veröffentlichungstag der Anmeldung: 24.08.2022
(73) Patentinhaber: Siemens Mobility GmbH, 81739 München (DE)
(72) Erfinder: WOLF, Günter, 90425 Nürnberg (DE)
(74) Vertreter: Siemens Patent Attorneys
(86) Internationale Anmeldenummer: PCT/EP2020/082202
(87) Internationale Veröffentlichungsnummer: WO 2021/121819

(56) Entgegenhaltungen:
- DE-A1-102015 219 692
- Deutsche Bahn Personenverkehr: "Grafische Sitzplatzreservierung im DB Navigator", , 15. Oktober 2015 (2015-10-15), Seiten 1-3, XP054981489, Gefunden im Internet: URL:www.youtube.com/watch?v=2zJuqxQrOWY [gefunden am 2021-03-05]

## Beschreibung

Es wird ein Verfahren zur Platzvergabe in einem Landfahrzeug angegeben. Darüber hinaus werden eine Vorrichtung, ein Computerprogramm, ein computerlesbares Speichermedium und ein System angegeben.

Die Deutsche Bahn bietet eine "Grafische Sitzplatzreservierung im DB Navigator", URL: www.youtube.com/watch?v=2zJuqxQrOWY, abgerufen am 2021-03-05, an, mittels der ein freier Sitzplatz nach Kundenwunsch in einem Modell ausgewählt und reserviert werden kann, welches das geplante Transportfahrzeug repräsentiert.

DE 10 2015 219692 A1 lehrt ein Verfahren zum Bereitstellen von Reiseinformationen und ein Informationssystem.

Eine zu lösende Aufgabe besteht darin, ein Verfahren anzugeben, mit dem Platzreservierungen in einem Landfahrzeug, insbesondere in einem Schienenfahrzeug, flexibel zugewiesen werden können. Weitere zu lösende Aufgaben bestehen darin, eine Vorrichtung, ein Computerprogramm, ein computerlesbares Speichermedium und ein System zur Durchführung eines solchen Verfahrens anzugeben.

Diese Aufgaben werden unter anderem durch die Gegenstände der Patentansprüche 1, 9, 10 und 11 gelöst. Vorteilhafte Ausgestaltungen und Weiterbildungen sind Gegenstand der abhängigen Patentansprüche und gehen weiterhin aus der nachstehenden Beschreibung und den Zeichnungen hervor.

Gemäß zumindest einer Ausführungsform umfasst das Verfahren zur Platzvergabe in einem Landfahrzeug einen Schritt A), in dem eine Anfrage für eine Platzreservierung für eine Person bei einem geplanten Transport in einem Landfahrzeug erfasst wird.

Die Anfrage erfolgt beispielsweise durch die Person selbst, zum Beispiel über eine Reservierungsapplikation (Reservierungs-App) oder eine Reservierungswebseite. Im Schritt A) wird also erfasst, dass eine Person an einem geplanten Transport mit einem Landfahrzeug teilnehmen möchte und für diese Teilnahme wird eine Platzreservierung angefragt. Ein Platz oder eine Platzreservierung meint zum Beispiel einen Sitzplatz beziehungsweise eine Sitzplatzreservierung.

Gemäß zumindest einer Ausführungsform umfasst das Verfahren einen Schritt B), in dem der Person eine Platzreservierung zugeordnet wird. Beispielsweise werden der Name der Person sowie die Information darüber, dass die Person für den Transport eine Platzreservierung hat, gespeichert. Dieser Schritt erfolgt bevorzugt nur, wenn eine Platzreservierung möglich ist, also für den geplanten Transport noch Plätze verfügbar sind. Bei dem Zuordnen der Platzreservierung können auch Parameter, zum Beispiel spezielle Wünsche hinsichtlich des Platzes, wie etwa ein Platz am Fenster oder am Gang oder an einem Tisch oder neben einer bestimmten Person, der Person zugeordnet werden. Diese Parameter werden beispielsweise mit der Anfrage übermittelt und dann erfasst und gespeichert.

Zusätzlich kann im oder nach dem Schritt B) eine Bestätigung der Platzreservierung ausgegeben werden. Die Bestätigung umfasst insbesondere Informationen, die der Person anzeigen, dass die Reservierung erfolgreich war und ihr ein Platz für den geplanten Transport zugesichert ist. Die Bestätigung kann dann beispielsweise als SMS oder E-Mail an die Person versendet werden.

Gemäß zumindest einer Ausführungsform umfasst das Verfahren einen Schritt C), in dem eine Layout-Information bereitgestellt wird. Die Layout-Information ist repräsentativ für die Verteilung von Plätzen in einem für den geplanten Transport einzusetzenden Landfahrzeug. Mit "Verteilung der Plätze" sind insbesondere die Anzahl und die räumliche Anordnung der Plätze in dem einzusetzenden Landfahrzeug gemeint.

Beispielsweise wird durch einen Benutzer das einzusetzende Landfahrzeug festgelegt. Das Festlegen erfolgt zum Beispiel durch Eingabe einer Bezeichnung des einzusetzenden Fahrzeuges in einen Computer. Mit dem Festlegen des einzusetzenden Landfahrzeuges ist das Layout der Platzverteilung in dem Landfahrzeug bekannt, sodass die Layout-Information bereitgestellt werden kann und im Folgenden verarbeitet werden kann. Insbesondere ist zu jedem Landfahrzeug die zugehörige Layout-Information gespeichert, zum Beispiel auf dem Computer.

Mit "einzusetzendem Landfahrzeug" ist das Landfahrzeug gemeint, das letztendlich für den Transport tatsächlich eingesetzt wird.

Gemäß zumindest einer Ausführungsform umfasst das Verfahren einen Schritt D), in dem der Person in Abhängigkeit von der Layout-Information und der Platzreservierung ein Platz zugeordnet wird. "In Abhängigkeit von der Platzreservierung" bedeutet hier insbesondere, dass eine Zuordnung bevorzugt oder ausschließlich dann erfolgt, wenn es eine Platzreservierung für die Person gibt beziehungsweise der Person eine Platzreservierung zugeordnet ist. "In Abhängigkeit von der Layout-Information" bedeutet insbesondere, dass die Zuordnung der Plätze unter Berücksichtigung der Verteilung der Plätze in dem einzusetzenden Landfahrzeug erfolgt.

Beispielsweise gibt es vor dem Schritt D) eine Vielzahl von Anfragen für Platzreservierungen durch eine Vielzahl von Personen, wobei die Anfragen erfasst werden und zumindest einigen Personen eine Platzreservierung zugeordnet wird. Im Schritt D) wird dann jeder Person mit einer zugeordneten Platzreservierung ein Platz in dem einzusetzenden Landfahrzeug in Abhängigkeit von der Layout-Information zugeordnet.

Bei der Zuordnung des Platzes in Abhängigkeit von der Layout-Information und der Platzreservierung können Parameter der Platzreservierung berücksichtigt werden, soweit die Verteilung der Plätze in dem Landfahrzeug dies zulässt. Zum Beispiel kann, wenn eine Person einen bestimmten Wunsch hinsichtlich ihres Platzes hatte, dies bei der Vergabe des Platzes im Schritt D) berücksichtigt werden, sofern noch oder überhaupt ein Fensterplatz oder ein Platz an einem Tisch verfügbar ist.

Gemäß zumindest einer Ausführungsform umfasst das Verfahren einen Schritt E), in dem eine Platz-Information ausgegeben wird. Die Platz-Information ist repräsentativ dafür, welcher Platz der Person zugeordnet wurde.

Anschließend kann beispielsweise eine SMS oder einer E-Mail mit der Platz-Information erstellt und an die Person verschickt werden und/oder die Platz-Information kann der Peron anderweitig mitgeteilt werden, zum Beispiel auf einem stationären Informationssystem auf einem Bahnsteig oder durch Servicepersonal.

Bevorzugt wird für jede Person mit einer zugeordneten Platzreservierung eine Platz-Information ausgegeben, die repräsentativ dafür ist, welcher Platz der Person zugeordnet wurde. So können alle Personen mit einer zugeordneten Platzreservierung in dem geplanten Transport über den jeweils zugeordneten Platz in dem einzusetzenden Landfahrzeug informiert werden.

Nach Erhalt der Platz-Information weiß die Person, welcher Platz ihr genau zugeordnet ist. Die Person kann diesen Platz dann in dem einzusetzenden Landfahrzeug finden und einnehmen.

Der Schritt C) erfolgt nach dem Schritt A) und auch nach dem Schritt B). Die Schritte D) und E) werden bevorzugt nach dem Schritt C) ausgeführt.

Anders ausgedrückt wird die Layout-Information bereitgestellt, nachdem Platzreservierungen angefragt und/oder vergeben worden sind. Insbesondere wird auch erst nach den Anfragen und Vergaben der Platzreservierungen das einzusetzende Landfahrzeug festgelegt. Mit anderen Worten steht zu dem Zeitpunkt, zu dem die Platzreservierungen vergeben/zugeordnet werden, das letztendlich für den Transport eingesetzte Landfahrzeug und somit die Verteilung der Plätze in dem Landfahrzeug noch nicht endgültig fest.

Die Schritte A), B), C), D) und E) werden auf oder mit einem Computer durchgeführt werden. Insofern handelt es sich um ein computerimplementiertes Verfahren.

Nach den Schritten A) bis E) wird der geplante Transport mit dem einzusetzenden Landfahrzeug durchgeführt.

In mindestens einer Ausführungsform des Verfahrens zur Platzvergabe in einem Landfahrzeug umfasst dieses die Schritte:
A) Erfassen einer Anfrage für eine Platzreservierung für eine Person bei einem geplanten Transport in einem Landfahrzeug;
B) Zuordnen einer Platzreservierung zu der Person;
C) Bereitstellen einer Layout-Information, die repräsentativ für die Verteilung von Plätzen in einem für den geplanten Transport einzusetzenden Landfahrzeug ist;
D) Zuordnen eines Platzes in dem einzusetzenden Landfahrzeug zu der Person in Abhängigkeit von der Layout-Information und der Platzreservierung;
E) Ausgabe einer Platz-Information, die repräsentativ dafür ist, welcher Platz der Person zugeordnet wurde,
wobei
- der Schritt C) nach dem Schritt A) ausgeführt wird.

Der vorliegenden Erfindung liegt insbesondere die Erkenntnis zu Grunde, dass, wenn Fahrgäste für eine Reise Sitzplätze gebucht (reserviert) haben und aufgrund betrieblicher oder technischer Notwendigkeiten ein Landfahrzeug mit anderem Innenlayout (zum Beispiel Tische an anderen Plätzen, andere Nummerierung, weniger Sitzplätze) eingesetzt werden muss, die Reservierung üblicherweise nicht ohne weiteres auf das neue Layout angewendet werden kann. Es entsteht dann, insbesondere in vollen Landfahrzeugen, bisweilen Streit zwischen Passagieren und/oder dem Servicepersonal, wer nun Anspruch auf welchen Platz hat. Dies kann im Extremfall auch dazu führen, dass Polizeikräfte zur Unterstützung gerufen werden müssen, was weitere Verzögerungen zur Folge hat.

Mit der vorliegenden Erfindung wird den Fahrgästen/Personen mit zugeordneten Platzreservierungen nicht von vornherein ein fester Platz zugewiesen. Erst wenn das einzusetzende Landfahrzeug feststeht, wird entsprechend des Layouts, also entsprechend der Platzverteilung in dem Landfahrzeug, jedem Fahrgast ein Platz zugeordnet. Dieses Verfahren der Platzvergabe ist viel flexibler als übliche Verfahren und kann auch bei unvorhergesehenen Wechseln des einzusetzenden Landfahrzeugs eingesetzt werden.

Gemäß zumindest einer Ausführungsform ist das einzusetzende Landfahrzeug für den geplanten Transport modular aufgebaut. Das heißt, das Landfahrzeug umfasst mehrere austauschbare Module mit jeweils mehreren Plätzen. Die Module sind in dem Landfahrzeug beispielsweise über Kupplungen aneinander gehängt. Eines der Module kann eine Zugmaschine sein. Ein oder mehrere weitere Module können Anhänger sein.

Gemäß zumindest einer Ausführungsform ist das einzusetzende Landfahrzeug ein Schienenfahrzeug, wie etwa ein Zug. Alternativ kann es sich bei dem einzusetzenden Landfahrzeug aber auch um ein anders Fernverkehrsfahrzeug, wie etwa einen Bus, handeln.

Im Schritt B) wird der Person eine Kennung eindeutig zugeordnet. Bei der Kennung kann es sich um eine Zeichenabfolge aus Buchstaben und/oder Ziffern handeln. Die Kennung wird dann anschließend ausgegeben. Zum Beispiel wird die Kennung dann zusammen mit der Bestätigung der Platzreservierung ausgegeben. Die Kennung wird der Person insbesondere mitgeteilt, beispielsweise durch SMS oder E-Mail.

Im Schritt D) wird die Kennung eindeutig einem Platz in dem einzusetzenden Landfahrzeug zugeordnet. Die Kennung unterscheidet sich dabei bevorzugt von einer dem Platz fest und unveränderlich zugeordneten Platzkennung.

Gemäß zumindest einer Ausführungsform ist die im Schritt E) ausgegebene Platz-Information repräsentativ für die Zuordnung der Kennung zu dem Platz.

Zumindest einigen Plätzen in dem einzusetzenden Landfahrzeug ist eine elektronische Anzeige zugeordnet. Die Kennung wird in der elektronischen Anzeige angezeigt. Dies passiert insbesondere nach dem Schritt E).

Die elektronische Anzeige ist bevorzugt an oder über dem zugehörigen Platz in dem Landfahrzeug angeordnet, sodass ein Fahrgast die Anzeige lesen kann, wenn er sich an dem Platz befindet. Bei der Anzeige handelt es sich insbesondere um einen Bildschirm/Display.

Statt den Umweg über eine Kennung kann die im Schritt E) ausgegebene Platz-Information auch nur repräsentativ für die der Person zugeordnete Platzkennung sein, wobei die Platzkennung eine einem Platz fest und unveränderlich zugeordnete Kennung, zum Beispiel eine Ziffern- und/oder Buchstabenfolge, ist. Die Platzkennung ist an jedem Platz unveränderlich und optisch wahrnehmbar angebracht. Die der Person zugeordnete Platzkennung wird der Person dann mitgeteilt und so kann die Person ihren Platz ausfindig machen.

Gemäß zumindest einer Ausführungsform wird der Person der ihr zugeordnete Platz in einer elektronischen Karte angezeigt. Die elektronische Karte stellt die Verteilung der Plätze in dem einzusetzenden Landfahrzeug grafisch dar. Dieser Schritt wird insbesondere nach dem Schritt E) ausgeführt.

Unter einer elektronischen Karte wird insbesondere eine auf einem Bildschirm beziehungsweise Display dargestellte grafische Repräsentation der Verteilung der Sitzplätze in dem einzusetzenden Landfahrzeug verstanden. Der Person kann der zugeordnete Platz zum Beispiel durch eine Markierung oder Hervorhebung in der Karte angezeigt werden.

Gemäß zumindest einer Ausführungsform wird die Karte auf einem mobilen Endgerät, wie zum Beispiel einem Smartphone oder Tablet, und/oder einem stationären Informationssystem angezeigt. Bei dem stationären Informationssystem handelt es sich zum Beispiel um ein Fahrgastinformationssystem an einem Bahnhof, an dem der Transport in dem einzusetzenden Landfahrzeug startet.

Gemäß zumindest einer Ausführungsform wird die Person mithilfe eines Navigationsprogramms, das auf einem mobilen Endgerät der Person ausgeführt wird, zu dem der Person zugeordneten Platz geleitet. Dieser Schritt wird nach dem Schritt E) ausgeführt.

Bei der Durchführung des Navigationsprogramms kommuniziert das mobile Endgerät der Person bevorzugt mit Markierungen, zum Beispiel Bluetooth-Icons oder RFID-Chips, in dem eingesetzten Landfahrzeug. Durch diese Kommunikation wird erkannt, an welcher Position in dem Landfahrzeug sich die Person beziehungsweise das mobile Endgerät gerade befindet. Mit anderen Worten handelt es sich bei dem Navigationsprogramm um ein Indoor-Navigationsprogramm.

Gemäß zumindest einer Ausführungsform wird das für den Transport einzusetzende Fahrzeug frühestens 24 Stunden vor der Durchführung des Transportes festgelegt. Beispielsweise erfolgt das Festlegen des einzusetzenden Fahrzeuges frühestens 1 Stunde oder frühestens 30 Minuten vor der Durchführung des Transportes. Entsprechend wird auch frühestens dann die Layout-Information bereitgestellt. Alternativ oder zusätzlich wird das einzusetzende Landfahrzeug erst festgelegt, wenn die Vergabe von Platzreservierungen für den Transport abgeschlossen ist.

Gemäß zumindest einer Ausführungsform wird vor dem Schritt C) ein vorläufiges Landfahrzeug für den geplanten Transport ausgewählt. Anschließend und vor oder bei dem Schritt C) wird ein einzusetzendes Landfahrzeug festgelegt, das sich von dem vorläufigen Landfahrzeug unterscheidet. Beispielsweise fällt das vor dem Schritt C) ausgewählte, vorläufige Landfahrzeug aufgrund eines Defekts aus, so dass mit dem Schritt C) ein neues Landfahrzeug festgelegt werden muss. Das beschriebene Verfahren zur Platzvergabe ist besonders vorteilhaft in einem solchen Fall, weil nun die Platzvergabe auf das neue Layout des mit dem Schritt C) festgelegten Fahrzeuges angepasst wird.

Als nächstes wird die Vorrichtung angegeben. Bei der Vorrichtung handelt es sich beispielsweise um einen Computer. Die Vorrichtung umfasst einen Prozessor, der so eingerichtet ist, dass er ein hier beschriebenes Verfahren, insbesondere die Schritte A) bis E), durchführt. Alle im Zusammenhang mit dem Verfahren offenbarten Merkmale sind auch für die Vorrichtung offenbart und umgekehrt.

Die Vorrichtung kann Mittel zur Kommunikation mit anderen Geräten, zum Beispiel mobilen Endgeräten oder einem Informationssystem, oder einem Benutzer umfassen. Die Mittel können zum Empfangen einer Reservierungsanfrage, zum Aussenden einer Reservierungsbestätigung, zum Aussenden der Platz-Information über den zugeordneten Platz sowie zur Eingabe und zum Festlegen des einzusetzenden Landfahrzeuges eingerichtet sein. Bei den Mitteln kann es sich um Kommunikationsschnittstellen der Vorrichtung handeln.

Die Vorrichtung ist beispielsweise eine ortsgebundene Vorrichtung, insbesondere eine landseitige Vorrichtung. Zum Beispiel ist die Vorrichtung Teil einer Betriebszentrale, von der aus eine Koordinierung der Landfahrzeuge erfolgt.

Als nächstes wird das Computerprogramm angegeben. Das Computerprogramm umfasst Befehle, die bei der Ausführung des Programms durch einen Computer diesen veranlassen, ein hier beschriebenes Verfahren auszuführen. Insbesondere werden bei der Ausführung des Programms die Schritte A) bis E) ausgeführt.

Als nächstes wird das computerlesbare Speichermedium angegeben. Das computerlesbare Speichermedium umfasst Befehle, die bei der Ausführung durch einen Computer diesen veranlassen, das hier beschriebene Verfahren, insbesondere die Schritte A) bis E), auszuführen.

Als nächstes wird das System angegeben. Das System ist insbesondere zur Durchführung des hier beschriebenen Verfahrens eingerichtet. Alle im Zusammenhang mit dem Verfahren offenbarten Merkmale sind somit auch für das System offenbart und umgekehrt.

Gemäß zumindest einer Ausführungsform umfasst das System eine hier beschriebene Vorrichtung sowie ein Landfahrzeug mit mehreren Plätzen, beispielsweise Sitzplätzen, denen jeweils eine elektronische Anzeige zugeordnet ist. Das System ist bevorzugt so eingerichtet, dass die Kennung in der elektronischen Anzeige angezeigt wird.

Gemäß einer weiteren Ausführungsform umfasst das System eine hier beschriebene Vorrichtung sowie ein stationäres Informationssystem. Das System ist dann insbesondere so eingerichtet, dass auf dem Informationssystem die elektronische Karte angezeigt wird, wodurch der Person der ihr zugeordnete Platz angezeigt wird.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

Es zeigen:
Figur 1 ein Ablaufdiagramm eines Ausführungsbeispiels des Verfahrens zur Platzvergabe in einem Landfahrzeug,
Figuren 2 bis 8 verschiedene Positionen in einem Ausführungsbeispiel des Verfahrens.

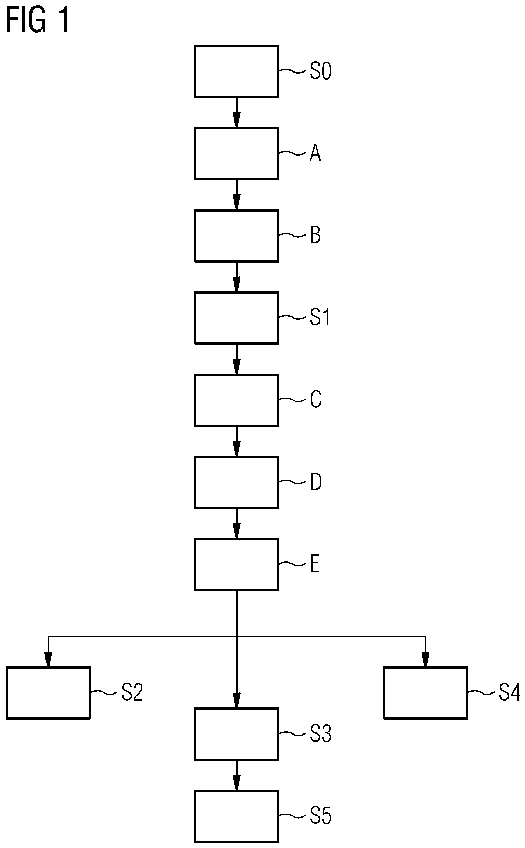

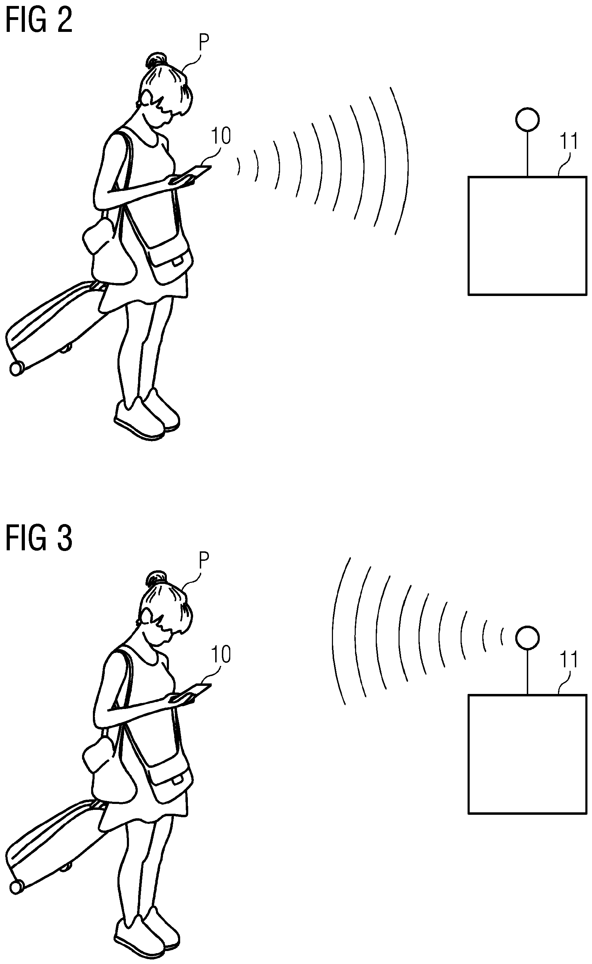

Figur 1 zeigt ein Ausführungsbeispiel des Verfahrens anhand eines Ablaufdiagramms. In einem Schritt S0) erfolgt eine Anfrage für eine Platzreservierung bei einem geplanten Transport in einem Landfahrzeug 1 für und durch eine Person P, beispielsweise mithilfe eines Smartphones 10 oder über eine Internetseite des Anbieters des Transportes (siehe auch Figur 2).

In einem Schritt A) wird die Anfrage für eine Platzreservierung erfasst, zum Beispiel durch eine dazu eingerichtete Vorrichtung 11, wie etwa einem Computer 11 in einer Betriebszentrale (siehe Figur 2).

In einem darauffolgenden Schritt B) erfolgt ein Zuordnen einer Platzreservierung zu der Person P. Dies erfolgt selbstverständlich nur, wenn eine Platzreservierung noch möglich ist, weil für den geplanten Transport in dem Landfahrzeug 1 noch ein Platz nicht reserviert ist. Im Schritt B) wird der Person P außerdem eine Kennung ID eindeutig zugeordnet und diese Kennung ID wird anschließend ausgegeben.

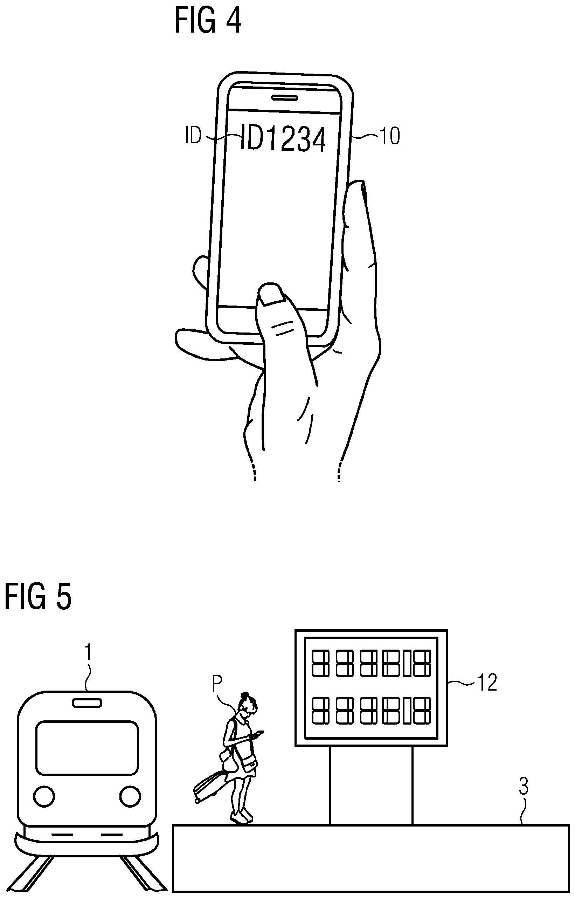

In einem Schritt S1) wird beispielsweise eine Nachricht mit der Bestätigung, zum Beispiel in Form einer SMS oder einer E-Mail, erstellt, die an die Person gesendet wird (siehe auch Figuren 3 und 4). Dabei wird auch die der Person zugeordnete Kennung ID übermittelt.

In einem Schritt C) wird eine Layout-Information bereitgestellt, die repräsentativ für die Verteilung von Plätzen 2 in einem für den geplanten Transport einzusetzenden Landfahrzeug 1 ist. Das einzusetzende Landfahrzeug 1 wird bevorzugt auch erst nach dem Schritt S1) festgelegt. Das Festlegen des einzusetzenden Landfahrzeuges erfolgt zum Beispiel durch einen Betreiber des Transports.

In einem Schritt D) wird daraufhin der Person P in Abhängigkeit von der Layout-Information und der ihr zugeordneten Platzreservierung ein Platz in dem einzusetzenden Landfahrzeug 1 zugeordnet.

In einem Schritt E) wird dann eine Platz-Information ausgegeben, die repräsentativ dafür ist, welcher Platz der Person P zugeordnet wurde. Die Platz-Information kann der Person P dann auf verschiedene Arten mitgeteilt werden (siehe auch Figuren 5 bis 8).

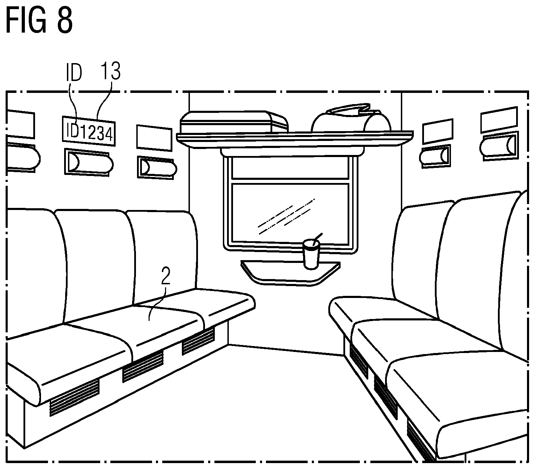

In einem Schritt S2) wird die Platz-Information der Person P einerseits dadurch mitgeteilt, dass die der Person P zugeordnete Kennung ID in einer elektronischen Anzeige 13 an einem der Person P zugeordneten Platz 2 angezeigt wird (siehe auch Figur 8).

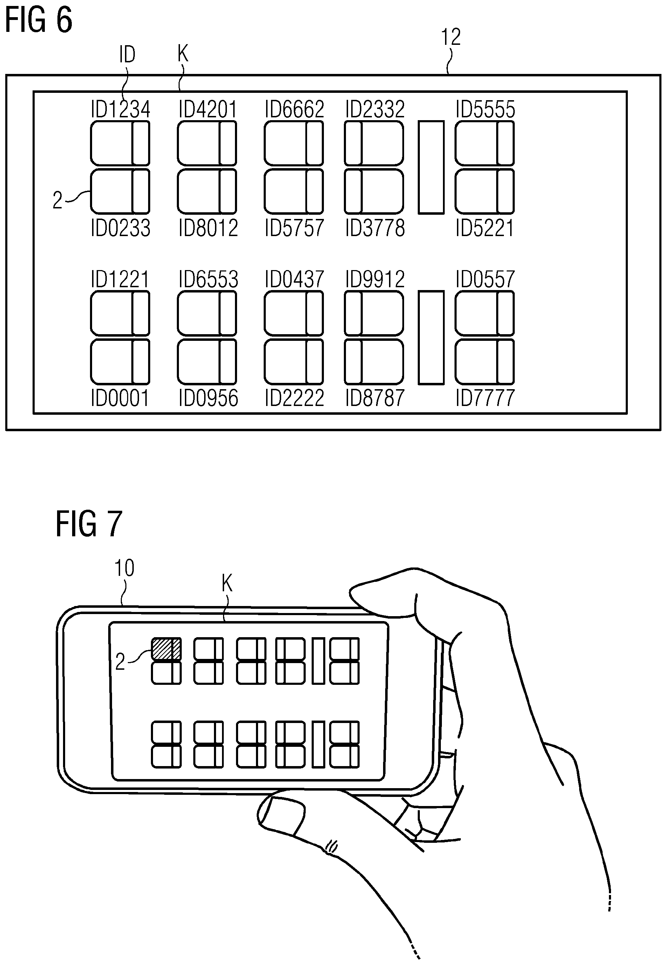

In einem Schritt S3) wird die Platz-Information der Person P dadurch mitgeteilt, dass der der Person P zugeordnete Platz 2 der Person P in einer elektronischen Karte K auf einem Smartphone 10 der Person angezeigt wird (siehe auch Figur 7).

In einem Schritt S4) wird die Platz-Information der Person P dadurch mitgeteilt, dass der der Person P zugeordnete Platz 2 der Person P in einer elektronischen Karte K auf einem stationären Informationssystem 12 angezeigt wird (siehe auch Figuren 5 und 6).

In einem Schritt S5) wird die Person P mit Hilfe eines Navigationsprogramms, das auf einem mobilen Endgerät der Person ausgeführt wird, zu dem der Person P zugeordneten Platz 2 geleitet.

Insbesondere die Schritte A), B), C), D) und E) können alle auf dem Computer 11 ausgeführt werden.

In der Figur 2 ist eine Position gezeigt, in der eine Person P mithilfe eines Smartphones 10 eine Anfrage für eine Platzreservierung bei einem geplanten Transport in einem Landfahrzeug 1, vorliegend beispielsweise einem Schienenfahrzeug 1, stellt. Diese Anfrage wird an eine Vorrichtung 11 übermittelt. Mithilfe der Vorrichtung 11 wird die Anfrage erfasst (siehe Schritt A) in Figur 1).

In der Figur 3 ist eine Position gezeigt, bei der mithilfe der Vorrichtung 11 eine Bestätigung der Platzreservierung ausgegeben wird. Diese wird von dem Smartphone 10 der Person P erfasst. Beispielsweise wird die Bestätigung in Form einer SMS oder E-Mail an die Person P übermittelt und der Person P dann auf dem Smartphone 10 angezeigt.

In der Figur 4 ist eine Position gezeigt, bei dem der Person P neben der Bestätigung der Platzreservierungen auch eine Kennung ID mitgeteilt wird, die auf dem Smartphone 10 angezeigt wird. Die Kennung ID ist der Person P bevorzugt eindeutig zugeordnet. Diese Kennung ID wird beispielsweise im Schritt S1) durch die Vorrichtung 11 erstellt und gleichzeitig oder nach der Bestätigung der Platzreservierungen ausgegeben.

In der Figur 5 ist eine Position gezeigt, in der ein einzusetzendes Schienenfahrzeug 1 für den geplanten Transport festgelegt ist. Das Schienenfahrzeug 1 ist bereits an einem Bahnsteig 3 eingefahren. Ferner wurde bereits die Zuordnung der Plätze in dem einzusetzenden Schienenfahrzeug 1 zu den Personen mit Platzreservierung vorgenommen. Auf dem Bahnsteig 3 ist ein stationäres Informationssystem 12 vorgesehen, auf dem der Person P die Information darüber, welcher Platz ihr in dem festgelegten und einzusetzenden Schienenfahrzeug 1 zugeordnet ist, mitgeteilt wird. Das stationäre Informationssystem 12 umfasst eine Anzeige an dem Bahnsteig 3.

In der Figur 6 ist die Anzeige vergrößert dargestellt. Zu erkennen ist, dass der Person P der ihr zugeordnete Platz in einer elektronischen Karte K angezeigt wird. Auf der elektronischen Karte K sind die Plätze 2 (Sitzplätze 2) in dem Schienenfahrzeug 1 grafisch dargestellt und neben jedem Platz 2 ist eine Kennung ID dargestellt. Dadurch ist angezeigt, welcher Platz 2 welche Kennung ID zugeordnet ist und dadurch weiß jede Person P, welcher Platz 2 ihr zugeordnet ist.

In der Figur 7 ist eine Position gezeigt, in der der Person P die Information über die Zuordnung des Platzes 2 zusätzlich in einer elektronischen Karte K auf ihrem Smartphone angezeigt wird. Auch hier umfasst die elektronische Karte K wieder die grafische Darstellung der Platzverteilung. Der der Person P zugeordnete Platz 2 ist hier hervorgehoben dargestellt.

In der Figur 8 ist eine Position gezeigt, in der ein Innenbereich des Schienenfahrzeuges 1 dargestellt ist. Vorliegend handelt es sich um die Darstellung eines Abteils in dem Schienenfahrzeug 1. Das Abteil umfasst sechs Sitzplätze 2, wobei jedem Sitzplatz 2 eine elektronische Anzeige 13 zugeordnet ist. Auf einer elektronischen Anzeige 13 ist die der Person P mitgeteilte Kennung ID dargestellt. Dadurch weiß die Person P, wenn sie durch das Schienenfahrzeug 1 läuft, welcher Platz 2 ihr zugeordnet ist.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Landfahrzeug
- 2: Platz
- 3: Bahnsteig
- 10: mobiles Endgerät
- 11: Vorrichtung
- 12: stationäres Informationssystem
- 13: elektronische Anzeige
- P: Person
- ID: Kennung
- K: elektronische Karte
- S0-S5: Verfahrensschritte
- A - E: Verfahrensschritte

## Patentansprüche

1. Computerimplementiertes Verfahren zur Platzvergabe in einem Landfahrzeug (1), umfassend die Schritte:
A) Erfassen einer Anfrage für eine Platzreservierung für eine Person (P) bei einem geplanten Transport in einem Landfahrzeug (1);
B) Zuordnen einer Platzreservierung zu der Person (P), wobei der Person (P) eine Kennung (ID) eindeutig zugeordnet wird und diese Kennung (ID) anschließend ausgegeben wird;
C) Festlegen eines einzusetzenden Landfahrzeugs und Bereitstellen einer Layout-Information, die repräsentativ für die Verteilung von Plätzen (2) in dem für den geplanten Transport einzusetzenden Landfahrzeug (1) ist;
D) Zuordnen eines Platzes (2) in dem einzusetzenden Landfahrzeug (1) zu der Person (P) in Abhängigkeit von der Layout-Information und der Platzreservierung, wobei die Kennung (ID) eindeutig dem Platz (2) in dem einzusetzenden Landfahrzeug (1) zugeordnet wird;
E) Ausgabe einer Platz-Information, die repräsentativ dafür ist, welcher Platz (2) der Person (P) zugeordnet wurde, wobei die ausgegebene Platz-Information repräsentativ für die Zuordnung der Kennung (ID) zu dem Platz (2) ist,
wobei
- der Schritt C) nach dem Schritt A) und nach dem Schritt B) ausgeführt wird,
- zumindest einigen Plätzen (2) in dem einzusetzenden Landfahrzeug (1) jeweils eine elektronische Anzeige (13) zugeordnet ist,
- die Kennung (ID) in der elektronischen Anzeige (13) angezeigt wird.

2. Verfahren nach Anspruch 1,
wobei das einzusetzende Landfahrzeug (1) modular aufgebaut ist.

3. Verfahren nach einem der vorhergehenden Ansprüche,
wobei das einzusetzende Landfahrzeug (1) ein Schienenfahrzeug ist.

4. Verfahren nach einem der vorhergehenden Ansprüche,
wobei
- der Person (P) der ihr zugeordnete Platz (2) in einer elektronischen Karte (K) angezeigt wird,
- die elektronische Karte (K) die Verteilung der Plätze (2) in dem einzusetzenden Landfahrzeug (1) grafisch darstellt.

5. Verfahren nach Anspruch 4,
wobei die Karte (K) auf einem mobilen Endgerät (10) und/oder einem stationären Informationssystem (12) angezeigt wird.

6. Verfahren nach einem der vorhergehenden Ansprüche,
wobei die Person (P) mit Hilfe eines Navigationsprogramms, das auf einem mobilen Endgerät (10) der Person (P) ausgeführt wird, zu dem der Person (P) zugeordneten Platz (2) geleitet wird.

7. Verfahren nach einem der vorhergehenden Ansprüche,
wobei frühestens 24 Stunden vor der Durchführung des Transportes das für den Transport einzusetzende Landfahrzeug (1) festgelegt wird.

8. Verfahren nach einem der vorhergehenden Ansprüche, wobei
- vor dem Schritt C) ein vorläufiges Landfahrzeug für den geplanten Transport ausgewählt wird,
- anschließend und vor oder bei dem Schritt C) ein einzusetzendes Landfahrzeug (1) festgelegt wird, das sich von dem vorläufigen Landfahrzeug unterscheidet.

9. Computerprogramm, umfassend Befehle, die bei der Ausführung des Programms durch einen Computer diesen veranlassen, das Verfahren nach einem der Ansprüche 1 bis 3 und 7 bis 8 auszuführen.

10. Computerlesbares Speichermedium, umfassend Befehle, die bei der Ausführung durch einen Computer diesen veranlassen, das Verfahren nach einem der Ansprüche 1 bis 3 und 7 bis 8 auszuführen.

11. System, umfassend
- eine Vorrichtung (11) umfassend einen Prozessor, der so eingerichtet ist, dass er ein Verfahren nach einem der Ansprüche 1 bis 3 und 7 bis 8 ausführt,
- ein Landfahrzeug (1) mit mehreren Plätzen (2), denen jeweils eine elektronische Anzeige (13) zugeordnet ist, wobei
- das System dazu eingerichtet ist, ein Verfahren nach Anspruch 1 durchzuführen.

## Claims

1. Computer-implemented method for allocating seats in a land vehicle (1), comprising the following steps:
A) receiving a request for a seat reservation for a person (P) for a scheduled trip in a land vehicle (1);
B) assigning a seat reservation to the person (P), wherein an identifier (ID) is assigned uniquely to the person (P) and this identifier (ID) is then issued;
C) defining a land vehicle to be used and providing layout information representative of the distribution of seats (2) in the land vehicle (1) to be used for the scheduled trip;
D) assigning a seat (2) to the person (P) in the land vehicle (1) to be used on the basis of the layout information and the seat reservation, wherein the identifier (ID) is assigned uniquely to the seat (2) in the land vehicle (1) to be used;
E) issuing seat information representative of which seat (2) has been assigned to the person (P), wherein the issued seat information is representative of the assignment of the identifier (ID) to the seat (2),
wherein
- step C) is carried out after step A) and after step B),
- at least some seats (2) in the land vehicle (1) to be used are assigned a respective electronic display (13),
- the identifier (ID) is displayed on the electronic display (13).

2. Method according to Claim 1,
wherein the land vehicle (1) to be used is modular.

3. Method according to either of the preceding claims,
wherein the land vehicle (1) to be used is a rail vehicle.

4. Method according to one of the preceding claims,
wherein
- the person (P) is shown their assigned seat (2) on an electronic map (K),
- the electronic map (K) graphically displays the distribution of the seats (2) in the land vehicle (1) to be used.

5. Method according to Claim 4,
wherein the map (K) is displayed on a mobile terminal (10) and/or on a static information system (12).

6. Method according to one of the preceding claims,
wherein the person (P) is guided to the seat (2) assigned to the person (P) with the aid of a navigation program executed on a mobile terminal (10) of the person (P).

7. Method according to one of the preceding claims,
wherein the land vehicle (1) to be used for the trip is defined at the earliest 24 hours before the trip is taken.

8. Method according to one of the preceding claims, wherein
- a provisional land vehicle for the scheduled trip is selected prior to step C),
- subsequently, and before or in step C), a land vehicle (1) to be used that is different from the provisional land vehicle is defined.

9. Computer program comprising instructions that, when the program is executed by a computer, cause said computer to carry out the method according to one of Claims 1 to 3 and 7 to 8.

10. Computer-readable storage medium comprising instructions that, when executed by a computer, cause said computer to carry out the method according to one of Claims 1 to 3 and 7 to 8.

11. System, comprising
- a device (11) comprising a processor that is configured such that it carries out a method according to one of Claims 1 to 3 and 7 to 8,
- a land vehicle (1) having a plurality of seats (2), each of which is assigned an electronic display (13), wherein
- the system is configured to perform a method according to Claim 1.

## Revendications

1. Procédé mis en œuvre par ordinateur d'attribution de sièges dans un véhicule (1) terrestre, comprenant les stades :
A) saisie d'une demande d'une réservation de siège pour une personne (P) à la planification d'un transport dans un véhicule (1) terrestre ;
B) affectation d'une réservation de siège à la personne (P), dans lequel on affecte de manière univoque une identification (ID) à la personne (P) et on édite ensuite cette identification (ID) ;
C) détermination d'un véhicule terrestre à utiliser et mise à disposition d'une information de layout, qui est représentative de la répartition de sièges (2) dans le véhicule (1) terrestre à utiliser pour le transport planifié ;
D) affectation d'un siège (2) dans le véhicule (1) terrestre à utiliser à la personne (P) en fonction de l'information de layout et de la réservation de sièges, dans lequel l'identification (ID) est affectée de manière univoque au siège (2) dans le véhicule (1) terrestre à utiliser ;
E) édition d'une information de siège, qui est représentative du siège (2), qui a été affecté à la personne (P), dans lequel l'information de siège éditée est représentative de l'affectation de l'identification (ID) au siège (2),
dans lequel
- on effectue le stade C) après le stade A) et après le stade B),
- respectivement un affichage (13) électronique est affecté au moins à certains sièges (2) dans le véhicule (1) terrestre à utiliser,
- on affiche l'identification (ID) dans l'affichage (13) électronique.

2. Procédé suivant la revendication 1,
dans lequel le véhicule (1) terrestre à utiliser est de constitution modulaire.

3. Procédé suivant l'une des revendications précédentes,
dans lequel le véhicule (1) terrestre à utiliser est un véhicule ferroviaire.

4. Procédé suivant l'une des revendications précédentes,
dans lequel
- on indique, dans une carte (K) électronique, le siège (2), qui lui est affecté à la personne (P),
- la carte (K) électronique représente graphiquement la répartition des sièges (2) dans le véhicule (1) terrestre à utiliser.

5. Procédé suivant la revendication 4,
dans lequel on affiche la carte (K) sur un terminal (10) mobile et/ou sur un système (12) d'information fixe.

6. Procédé suivant l'une des revendications précédentes,
dans lequel on conduit la personne (P), à l'aide d'un programme de navigation que l'on exécute sur un terminal (10) mobile de la personne (P), au siège (2) affecté à la personne (P).

7. Procédé suivant l'une des revendications précédentes,
dans lequel, au plus tôt 24 heures avant d'effectuer le transport, on détermine le véhicule (1) terrestre à utiliser pour le transport.

8. Procédé suivant l'une des revendications précédentes,
dans lequel
- avant le stade C), on choisit un véhicule terrestre provisoire pour le transport planifié,
- ensuite et avant ou lors du stade C), on détermine un véhicule (1) terrestre à utiliser, qui se distingue du véhicule terrestre provisoire.

9. Programme d'ordinateur comprenant des instructions qui, lors de l'exécution du programme par un ordinateur, font que celles-ci exécutent le procédé suivant l'une des revendications 1 à 3 et 7 à 8.

10. Support de mémoire, déchiffrable par ordinateur, comprenant des instructions qui, lors de l'exécution par un ordinateur, font que celles-ci exécutent le procédé suivant l'une des revendications 1 à 3 et 7 à 8.

11. Système, comprenant
- une installation (11) comprenant un processeur, qui est agencé de manière à exécuter un procédé suivant l'une des revendications 1 à 3 et 7 à 8,
- un véhicule (1) terrestre ayant plusieurs sièges (2), auxquels est affecté respectivement un affichage (13) électronique, dans lequel
- le système est agencé pour effectuer un procédé suivant la revendication 1.
